Europäisches Patentamt

European Patent Office

Office européen des brevets

(19)

(11) **EP 0 630 514 B1**

(12) **EUROPÄISCHE PATENTSCHRIFT**

(45) Veröffentlichungstag und Bekanntmachung des Hinweises auf die Patenterteilung:
**16.10.1996 Patentblatt 1996/42**

(21) Anmeldenummer: 93903814.7

(22) Anmeldetag: **22.02.1993**

(51) Int Cl.$^6$: **G21C 3/07**, C22C 16/00

(86) Internationale Anmeldenummer:
**PCT/DE93/00151**

(87) Internationale Veröffentlichungsnummer:
**WO 93/18520 (16.09.1993 Gazette 1993/22)**

(54) **KERNREAKTOR-BRENNSTAB MIT ZWEISCHICHTIGEM HÜLLROHR**

NUCLEAR REACTOR FUEL ROD WITH DOUBLE LAYER CLADDING TUBE

ELEMENT COMBUSTIBLE D'UN REACTEUR NUCLEAIRE, COMPORTANT UN TUBE DE GAINAGE A DEUX COUCHES

(84) Benannte Vertragsstaaten:
**CH DE ES FR GB LI NL SE**

(30) Priorität: **13.03.1992 WOPCT/DE92/00218**
**30.04.1992 DE 9205857 U**

(43) Veröffentlichungstag der Anmeldung:
**28.12.1994 Patentblatt 1994/52**

(73) Patentinhaber: **SIEMENS AKTIENGESELLSCHAFT**
**80333 München (DE)**

(72) Erfinder:
• **GARZAROLLI, Friedrich**
**D-8552 Höchstadt/Aisch (DE)**
• **STEINBERG, Eckard**
**D-8520 Erlangen (DE)**

(56) Entgegenhaltungen:
**EP-A- 0 195 155**     **EP-A- 0 212 351**
**EP-A- 0 301 295**     **EP-A- 0 468 093**
**FR-A- 2 602 368**     **US-A- 4 735 768**

• **PATENT ABSTRACTS OF JAPAN vol. 13, no. 275 (C-610)(3623) 23. Juni 1989 & JP-A-01 073 037**
• **DATABASE WPIL Section Ch, Week 8709, Derwent Publications Ltd., London, GB; Class C, AN 87-062810 (09) & SE-A-8 406 646**

**Beschreibung**

Die Erfindung betrifft einen Brennstab eines druckwassergekühlten Brennelementes, mit einem eine Brennstoff-Füllung umschließenden Hüllrohr, das aus einer ersten, der Brennstoff-Füllung zugewandten dickeren Innenschicht aus einer ersten Zirkoniumlegierung und einer an die Innenschicht metallurgisch gebundenen, dünneren Außenschicht aus einer zweiten Zirkoniumlegierung besteht, wobei die beiden Zirkoniumlegierungen als Legierungsbestandteile jeweils mindestens die Metalle Zinn, Eisen und Chrom enthalten.

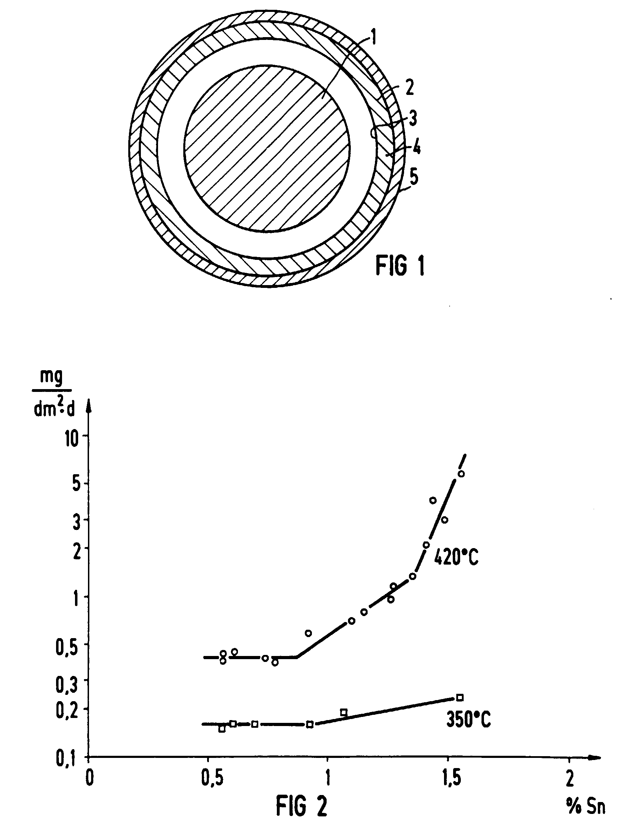

Zirkonium ist ein verhältnismäßig weiches Metall, das wegen seiner niedrigen Neutronenabsorption für Strukturteile von Kernreaktoren besonders geeignet ist und technisch meist als "Zirkoniumschwamm" hergestellt wird, dessen maximale Verunreinigungen für die Verwendung in Kernreaktoren genormt sind. Da die Brennstäbe von Reaktor-Brennelementen nur fingerdünn, aber mehrere Meter lang sind, ist für die mit Brennstoff gefüllten Brennstäbe und die Führungsrohre, Abstandhalter und anderen Strukturteile des Brennelements eine hohe, auch nach längerer Bestrahlung beständige Festigkeit erforderlich, die durch Zulegieren von Zinn erreichbar ist. Reines Zirkonium bildet in Wasser eine dünne Oxydschicht, die das Metall vor weiterer Oxydation schützt, wobei aber in die Struktur des Zirkoniums oder der Oxydschicht eingebaute Fremdstoffe, vor allem Stickstoff, die Korrosion stark beschleunigen können. Der Zinnzusatz neutralisiert zwar die Korrosionswirkung von Stickstoff, vor allem in Verbindung mit geringen Eisenzugaben, fördert aber bei höheren Zinngehalten selbst die Korrosion (B. Lustman, Frank Kerze: "The metallurgy of circonium" New York 1955, Seite 538, Fig. 10.34 und Seite 628, Fig. 11.35). Ein Eisenzusatz härtet die Legierung derart, daß bereits bei verhältnismäßig niedrigen Eisengehalten eine Verarbeitung der Legierung zu dünnen, langen Hüllrohren praktisch nicht mehr möglich ist. Außerdem führt ein derartiger Eisengehalt zu einer verstärkten Diffusion und Aufnahme des bei der Korrosion in Wasser entstehenden Wasserstoffs im Metall, wobei sich hydrierte Bereiche ausbilden ("W. Berry, D. Vaughan, E. White: "Hydrogen Pickup During Aqueous Corrosion of Zirconium Alloys" in: Corrosion, Vol.17 Nr. 3, März 1961, Seite 109 t, Fig. 1), die sehr spröde sind und die mechanische Stabilität des Materials drastisch herabsetzen.

Daher wurde aufgrund von Korrosionsversuchen im Labor, bei denen die Temperatur zur Beschleunigung der Korrosionsversuche heraufgesetzt ist, ein optimaler Bereich für die Gehalte von Zinn und Eisen festgelegt, der unter weiterer Berücksichtigung von Legierungsbestandteilen aus Chrom und Nickel im Hinblick auf die Korrosion möglichst optimiert wurde, wobei gleichzeitig auch auf eine ausreichende mechanische und thermische Stabilität geachtet wurde. Die Stabilitätsuntersuchungen erfolgten teilweise unter den Reaktorbedingungen, um auch nach einer längeren Bestrahlung ausreichende Festigkeit zu erhalten. Die dabei entwickelten Legierungen "Zirkaloy 2" und "Zirkaloy 4" haben sich unterdessen bei Strukturteilen von Brennelementen wassergekühlter Reaktoren im wesentlichen bewährt. Tabelle 1 gibt die als Werkstoffe der Reaktortechnik zugelassenen Qualitäten von Zirkoniumschwamm, Zirkaloy 2 und Zirkaloy 4 wieder. In dieser Schrift werden die Mengen der Legierungsbestandteile als Gew.-%, bezogen auf die Legierung, angegeben.

Bei längerem Einsatz im Reaktorkern setzt der Brennstoff Jod und andere Spaltprodukte frei, so daß sich dort eine aggressive Atmosphäre mit allmählich steigendem Druck aufbaut und sich auch das Volumen des Brennstoffs selbst erhöht. An der Innenseite des Hüllrohres treten daher besondere mechanisch-thermisch-chemische Belastungen auf, die zur Zerstörung des Hüllrohres führen können und eine Unterbrechung des Reaktorbetriebes zum Auswechseln des Brennstabes erforderlich machen können. Vor allem im Hinblick auf Siedewasserreaktoren werden daher häufig Verbundrohre verwendet, die an ihrer Innenseite eine dünne Schicht aus reinem Zirkonium oder einer hinsichtlich einer höheren Duktilität und einer den chemischen, mechanischen und thermischen Bedingungen angepaßten Resistenz optimiert ist. Die verbleibende, dicke Außenschicht des Hüllrohres sorgt einerseits für die erforderliche mechanische Stabilität des ganzen Hüllrohres, ist andererseits auf die Korrosion unter den Bedingungen des Kühlmittels, einem hauptsächlich aus Wasser bestehenden Flüssigkeit/Dampf-Gemisches mit mäßigem Druck und mäßiger Temperatur, ausgerichtet und besteht aus dem bereits bewährten Zirkaloy 2.

Moderne Druckwasserreaktoren besitzen eine Auslegung der Brennelemente und Reaktivitätsverteilung, die durch lange Standzeiten, hohe Abbrände und erhöhte Betriebstemperaturen eine Steigerung der Wirtschaftlichkeit zulassen. Voraussetzung hierbei ist aber, daß die Ausfallwahrscheinlichkeit der Brennelemente durch Hüllrohr-Defekte äußerst niedrig gehalten ist. Im Vordergrund stehen dabei Bemühungen, Primärschäden an der Hüllrohr-Außenfläche zu unterbinden, da durch derartige Primärdefekte an irgendeiner Stelle des langen Hüllrohres Wasser von dem hohen Druck im Kühlmittelstrom in das Hüllrohrinnere gedrückt werden kann, wo es mit dem heißen Brennstoff reagiert. Die Folge können dann verheerende Sekundärschäden an der Hüllrohr-Innenseite sein.

Im europäischen Patent 0 212 351 ist daher erstmalig ein zweischichtiges Verbundrohr als Hüllrohr eines wassergekühlten Reaktorbrennelementes vorgeschlagen, dessen dem Brennstoff zugewandte Innenschicht 80 bis 95 % der gesamten Wandstärke des Hüllrohres einnimmt und aus Zirkaloy 4 besteht, während die dünne Außenschicht aus Zirkonium mit 0,5 % Eisen und 0,25 % Vanadium besteht. Allgemein besitzt dieses sogenannte "Duplex-Rohr" als Träger, der die mechanischen Eigenschaften des ganzen Hüllrohres bestimmt, eine dicke Schicht aus Zirkaloy 2 oder Zirkaloy 4, auf die (z.B. durch gemeinsames Extrudieren zweier konzentrischer Rohre) eine dünne, äußere Schutzschicht aus einer zweiten Zirkoniumlegierung metallurgisch gebunden ist, die 0,1 bis 1 % Vanadium und/oder 0,1 bis 1 % Platin und/oder 1 bis 3 % Kupfer, sowie ggf. bis zu 1 % Eisen enthält. Alle Prozentangaben beziehen sich auf das Gewicht der Legierungen.

Derartige Hüllrohre zeigen ein hervorragendes Verhalten, insbesondere treten selbst bei Abbränden zwischen 40 und 60 MWd/kg Uran nur Oxydschichten mit Dicken unter 20 μ an der äußeren, dem Druckwasser ausgesetzten Oberfläche auf, während das mechanische Verhalten, z.B. das Längenwachstum und die Schrumpfung des Brennstababdurchmessers im Bereich der günstigsten, bei Vollrohren aus Zirkaloy 4 erhaltenen Werte liegt. Diese Hüllrohre sind jedoch verhältnismäßig teuer, wobei insbesondere die äußere Legierung wegen ihrer Härte mechanisch schwierig zu verarbeiten ist und langwierige, sorgfältige Verarbeitungsschritte mit einem erhöhten Anfall von Ausschuß erfordert. Hinzu kommt, daß die Legierungsbestandteile der zweiten Legierung wegen der hohen Neutronenabsorption an sich als Reaktorwerkstoffe nicht zugelassen und nur tolerierbar sind, da sie nur in der dünnen Außenschicht in niedrigen Konzentrationen verwendet werden. Der bei der Hüllrohrfertigung anfallende Ausschuß kann jedoch nicht ohne weiteres in die Hüllrohrfertigung rückgespeist werden, da die in der zweiten Legierung enthaltenen Legierungsbestandteile zu nicht-tolerierbaren Verunreinigungen des Zirkoniums bzw. Zirkaloys führen. Die hervorragenden Ergebnisse dieses Duplex-Hüllrohres wird insbesondere auf die Abwesenheit von Zinn in der Außenschicht zurückgeführt.

Das europäische Patent 0 301 295 beschreibt ein leichter zu verarbeitendes Duplex-Hüllrohr, bei dem die Außenschicht aus einer zinnfreien Zirkoniumlegierung mit 2,5 % Niob oder wenigstens aus einer zinnarmen Legierung mit 0,25 % Zinn, 0,5 % Eisen und 0,05 % Chrom besteht. Gute Ergebnisse werden bei einem Niob-Gehalt zwischen 0,2 und 3 % und/oder einem Gesamt-Gehalt an Eisen, Chrom, Nickel und Zinn zwischen 0,4 und 1,0 % erwartet. Einen ähnlichen Brennstab beschreibt die US-PS 5,023,048, wobei die Außenschicht aus Zr, (0,35 ... 0,65) % Sn, (0,2 .. 0,65) % Fe, (0,24 .. 0,35) % Nb und (0,09 .. 0,16) % 0 besteht und kein Chrom enthält.

Während die Brennelemente von Siedewasserreaktoren einer Kühlmitteltemperatur von etwa 280°C bei einem Druck von 70 bar ausgesetzt sind, beträgt die Oberflächentemperatur der Hüllrohre von Druckwasserreaktoren etwa 340° C, wobei das Kühlmittel eine Austrittstemperatur von etwa 320° C bei 170 bar aufweist. Trotz der zunächst relativ gering erscheinenden Unterschiede der Betriebsbedingungen unterscheiden sich die dabei ablaufenden Korrosionsvorgänge deutlich. Laborversuche, die zur Abkürzung der Versuchsdauern und zur Verschärfung der Korrosionsbedingungen bei der Entwicklung von Zirkaloy 2 und Zirkaloy 4 bei erhöhten Temperaturen (z.B. 360 bis 550°C), also in der Nähe oder über der kritischen Temperatur des Wassers, durchgeführt wurden, sind daher für das Korrosionsverhalten nur bedingt aussagekräftig.

Hinzu kommt, daß von den einzelnen Kraftwerksbetreibern aus anderen Gründen, z.B. dem Korrosionsschutz von Wärmetauschern oder anderen Bauteilen des Kühlmittelkreislaufes, Maßnahmen getroffen werden, die sich auf die Korrosionsvorgänge an den Brennstäben auswirken können. Auch werden beim Anfahren oder bei bestimmten, vorübergehenden Betriebszuständen Maßnahmen getroffen, die zu einer Veränderung der Korrosion an den Brennstabhüllen führen können.

So können z.B. Brennstäbe von Druckwasserreaktoren, die bei einer Kühlmittel-Austrittstemperatur von durchschnittlich 316°C betrieben werden, ein hervorragendes Verhalten zeigen, aber bereits bei Reaktoren mit mittleren Kühlmittel-Austrittstemperaturen von 326°C eine zwar geringfügige, aber unerwünscht höhere Ausfallwahrscheinlichkeit zeigen. Eine der Ursachen hierfür kann in der starken Temperaturabhängigkeit der Wasserstoffdiffusion bei sehr langen Standdauern liegen. Auch liegt zu Beginn des Betriebes mancher Kernreaktoren eine geringe Menge gelöstes Lithiumhydroxyd im Kühlmittelkreislauf vor, das die Korrosion der Hüllrohre stark beeinflussen kann.

Insbesondere kann eine Leistungssteigerung der Brennstäbe zu einer Brennstab-Außentemperatur führen, die zwar nur um wenige Grad höher ist, aber bei der z.B. in den Poren der Oxidschicht ein lokales Sieden auftritt, das zu wesentlich schärferen Korrosionsverhältnissen führt. Der erwähnte Li-Gehalt im Kühlwasser, der bei herkömmlichen Brennelement-Auslegungen noch keine Probleme erzeugt, kann sich beim lokalen Sieden aber in den Poren konzentrieren und dazu zwingen, entweder zu anderen Legierungen überzugehen oder auf die Leistungssteigerung zu verzichten.

Der Erfindung liegt daher die Aufgabe zugrunde, ein Brennelement mit Brennstab-Hüllrohren zu schaffen, die rationell herstellbar und den Betriebsbedingungen moderner Druckwasserreaktoren angepaßt sind.

Zur Lösung dieser Aufgabe geht die Erfindung zunächst davon aus, daß dabei keine vollkommen neuen Legierungen verwendet werden, deren Zulassung als Werkstoff der Reaktortechnik nur mittels umfangreicher, zeitraubender und teurer Verfahren möglich ist. Für die innere Rohroberfläche wird davon ausgegangen, daß Zirkaloy 2 und vor allem Zirkaloy 4 den dort während des Druckwasserbetriebes herrschenden Bedingungen ausreichend angepaßt sind und bei entsprechender Dicke einer daraus gefertigten Hüllrohr-Innenschicht auch die Belastungsfähigkeit sicherstellen, die für das Hüllrohr als Ganzes zu fordern ist. Auch für die Legierung der Außenschicht sollen möglichst keine für Zirkaloy 2 und Zirkaloy 4 nicht zugelassenen Legierungsbestandteile verwendet werden. Dadurch kann zwar auf die bisherigen, umfangreichen Erfahrungen mit Zirkaloy bei Druckwasserreaktoren zurückgegriffen werden, jedoch sind die Gewichtsanteile der einzelnen Legierungsbestandteile der äußeren Schicht vor allem im Hinblick auf das Langzeitverhalten bei Korrosion und Wasserstoffaufnahme neu zu bestimmen, wobei gegenläufige, einander ausschließende Tendenzen auftreten können, die durch eine neue Optimierung ausgeglichen werden müssen.

Auch für die Legierung der Außenschicht wird dabei eine wesentliche Abweichung von den für Zirkaloy geltenden Konzentrationsbereichen vermieden, was einerseits die Zulassung und Akzeptanz der Hüllrohre beim Einsatz in Kernreaktoren erleichtert, andererseits auch ein Rezirkulieren von Abfällen und Ausschuß bei der Hüllrohrherstellung ermöglicht. Insbesondere kann die dicke Stützschicht streng den Vorschriften des Zirkaloys entsprechen, falls dies erforderlich ist, andererseits erscheinen aber auch gewisse, geringfügige Abweichungen möglich und vertretbar, um z. B. diese Innenschicht noch besser an die an der Hüllrohr-Innenfläche geltenden mechanisch-thermisch chemischen Beanspruchungen anzupassen. Darüber hinaus ist es im Bedarfsfall auch möglich, die Resistenz der Außenschicht gegenüber einem lithiumhaltigen Kühlmittel bei langen Betriebsdauern zu erhöhen. Die Einsatzfähigkeit der neuen Brennstäbe soll dabei auch Druckwasserreaktoren umfassen, die z.B. bei geringfügig höheren Kühlmitteltemperaturen und/oder Lithiumzusätzen im Kühlmittel arbeiten.

Die nach diesen Grundsätzen entwickelten Brennstäbe weisen zur Lösung der Aufgabe die merkmale des Anspruchs 1 bzw. 17 auf und führen zu entsprechenden Brennelementen nach Anspruch 22

Der - später noch detaillierter erörterte - experimentelle Befund zeigt, daß ein höherer Zinngehalt, der zur Härtung des Zirkoniums nötig ist, bei Oxidschicht-Dicken von etwa 100 μ, wie sie im Reaktor an Hüllrohren auftreten, aber in Labortests oei Temperaturen von etwa 350° C erst nach langen Versucnsdauern beobachtet werden, die Korrosion ungünstig beeinflußt. Diese Langzeit-Korrosion nimmt mit abnehmendem Zinngehalt ab. Ein Eisengehalt führt zwar häufig zu spröden Ausscheidungen, die bei der mechanischen Bearbeitung zu Problemen führen, er hemmt aber die Langzeit-Korrosion und begrenzt - vor allem in Verbindung mit Chrom - die Wasserstoff-Aufnahme.

Die Erfindung sieht daher einen zweischichtigen Aufbau des Hüllrohres vor, bei dem die Grenzen für den Gehalt an Zinn, Eisen und Chrom in den beiden Legierungen gegenüber der Spezifikation von Zirkaloy modifiziert sind, wobei aber in der Außenscnicht der Gehalt an Zinn ("(Sn)(außen)") verringert ist, daß ein Mindestgehalt an Zinn, Eisen und Chrom nicht unterschritten wird:

$$(Sn)(außen) + (Fe+Cr)(außen) > 1\ \%$$

Für den Zinngehalt ist dabei zu beachten, daß eine zu starke Verringerung in der Außenschicht die Gefahr mit sicn bringt, daß bisher unbeachtete Schäden (z. B. verstärkte Korrosicn bei Anwesenneit von Lithium, das dem Kühlmittel aus anderen Gründen zugesetzt wird) auftreten. Obwohl für den Zinngehalt in der Spezifikation des Zirkaloy wegen der erforderlichen Härte des Hüllrohres Werte vorgesehen sind, die sich im Hinblick auf Korrosion und Hydrierung als ungünstig erweisen, kann eine Anreicherung des Zinns in der Innenschicht vorgenommen werden, solange ein ausreichender Gehalt an Eisen und Chrom in der Außenschicht vor Korrosion und Hydrierung schützt. Vorteilhaft ist dieser (Fe + Cr)-Gehalt der Außenschicht höher als in der Innenschicht; um aber bei der Verarbeitung Schwierigkeiten durch die Härtung der Innenschicht (Sn-Gehalt!) und die Versprödung der Außenschicht (Gehalt an Fe + Cr!) zu vermeiden und eine metallurgische Verbindung beider Schichten (z. B. durch gemeinsames Extrudieren zweier koaxialer Rohre) sicherzustellen, wird die Verringerung des Zinngehalts der Außenschicht - im Verhältnis zum Gehalt an Zinn in der Innenschicht ("(Sn)(innen)") - gemäß

$$\frac{(Sn)(außen)}{(Sn)(innen)} > 0{,}35\ (\text{vorzugsweise} \geq 0{,}40),$$

$$\frac{(Sn)(außen)}{(Sn)(innen)} < 0{,}7\ (\text{vorzugsweise} \leq 0{,}65),$$

$$(Sn)(innen) \geq 2\ x\ (Fe + Cr)(außen),$$

$$(Sn)(innen) \leq 5\ x\ (Fe + Cr)(außen)$$

vorgenommen.

Da beide Schichten also im wesentlichen aus den gleichen Legierungen bestehen, die nur in veränderten Mengenverhältnissen vorliegen, ist ein Verbundkörper aus diesen einander ähnlichen Legierungen weitgehend problemlos herzustellen und weiterzuverarbeiten.

Tabelle 2 gibt für die Konzentrationen der einzelnen Legierungsbestandteile in der ersten und zweiten Legierung Obergrenzen und Untergrenzen an, wobei in den Klammern vorteilhafte bzw. bevorzugte Werte angegeben sind, die die Konzentrationsbereiche weiter einengen.

Die unterschiedliche Zusammensetzung der beiden aus den gleichen Legierungsbestandteilen zusammengesetzten Legierungen kann dazu führen, daß bei der Hüllrohrherstellung anfallender Ausschuß oder Abfall eine mittlere Zusammensetzung aufweist, die geringfügig außerhalb der für Zirkaloy 2 oder Zirkaloy 4 zugelassenen Grenzen liegt, aber für die Herstellung der ersten Schicht brauchbar ist. Bezüglich der Langzeitkorrosion und der Wasserstoffaufnahme erscheint nach den im folgenden dargelegten Versuchsergebnissen ohnehin die Normierung von Zirkaloy 2 und Zirkaloy 4 nicht ganz optimal, und eine geringfügige Verschiebung der Konzentrationsgrenzen dürfte auch für Genehmigungsbehörden und Kraftwerksbetreiber tolerierbar sein. Für die Erfindung ergeben sich daher die in Tabelle 2 angegebenen minimalen und maximalen Gewichtsbestandteile von Zinn, Eisen und Chrom bei der Innenschicht. Daneben sind die gemäß der Erfindung vorgesehenen Unter- und Obergrenzen der Gewichtsbestandteile dieser Metalle in der Außenschicht angegeben. Engere Grenzen ergeben sich teils durch die Forderung, daß die Mengen aller Bestandteile der ersten Schicht innerhalb der für Zirkaloy 2 oder Zirkaloy 4 zugelassenen Grenzen liegen sollen und sind in Klammern angegeben. Die Klammern enthalten dabei teilweise auch vorteilhafte oder besonders bevorzugte Grenzwerte, die sich-insbesondere für die zweite Legierung ("Außenschicht")-aus den Versuchsergebnissen durch Optimierung ergeben.

Beiden Schichten ist gemeinsam, daß sie außer Zinn, Eisen und Chrom vorteilhaft nur noch weitere, für Zirkaloy 2 und Zirkaloy 4 zugelassene Legierungsbestandteile enthalten und die Mengen dieser weiteren Legierungsbestandteile, insbesondere Nickel, Silizium und Sauerstoff, praktisch innerhalb der für Zirkaloy 2 oder Zirkaloy 4 zugelassenen Grenzen liegen. Die Einstellung des Gehalts an Silizium und Sauerstoff ist zweckmäßig, um eine definierte Legierung mit einer stabilisierten Kornstruktur und einer vorteilhaften Kornfeinung zu erreichen.

Anhand von mehreren Figuren und Ausführungsbeispielen wird die Erfindung näher erläutert.
Es zeigen:

Figur 1 einen Querschnitt durch einen Brennstab nach der Erfindung,

Figuren 2 und 3 den Einfluß des Zinngehaltes in Zirkaloy 4-Werkstücken auf die Korrosion im Labortest und im Reaktor,

Figur 4 die Zeitabhängigkeit der Korrosion einer Zirkonium-Zinn-Legierung bei zwei unterschiedlichen Eisengehalten bei Langzeitversuchen,

Figur 5 einen Vergleich der Korrosionsrate von Zirkaloy 4 mit einer Zirkonium-Zinn-Legierung mit unterschiedlichen Eisengehalten im Langzeit-Test,

Figur 6 die Wasserstoffaufnahme von zwei ZrSnFeCr-Legierungen nach 410 Tagen, und Figuren 7 und 8 den Einfluß des Gehaltes an Sn bzw. Fe auf die Korrosion von Zirkonlegierungen in lithiumhaltiger Atmosphäre nach 153 Tagen.

Der in Figur 1 im Querschnitt gezeigte Brennstab befindet sich in einer axial verlaufenden Strömung von Wasser bei einer Temperatur von z.B. 326°C und einem Druck von etwa 160 bar.

Im Hüllrohr-Inneren befindet sich eine Säule aus Brennstofftabletten 1, die aus Uranoxyd oder einer Uranoxyd/Plutoniumoxyd-Mischung besteht, die während des Reaktorbetriebes zunehmend aggressive Gase und Spaltprodukte abgibt. Unter dem Einfluß der Reaktorstrahlung erleidet das Material des Hüllrohres 2 Strukturänderungen, die zu einem Längenwachstum des Hüllrohres führen, während gleichzeitig der Druck des Kühlmittels das Rohr zusammendrückt. Da mit wachsendem Abbrand das Volumen des Brennstoffs anwächst, kommt es zu Berührungen der inneren Oberfläche 3 des Hüllrohres mit dem heißen Brennstoff, so daß letztlich an dieser inneren Oberfläche nicht nur aggressive chemische Bedingungen, sondern auch mechanische und thermische Belastungen auftreten.

Im Hinblick auf diese Belastungen ist bei einem ersten Ausführungsbeispiel der Erfindung das Hüllrohr als Verbundkörper aus zwei miteinander metallurgisch verbundenen Schichten hergestellt, wobei die Dicke der Innenschicht 4 etwa 75 bis 95% der gesamten Hüllrohr-Wanddicke beträgt und die mechanische Stabilität des ganzen Hüllrohres bestimmt. Die Legierung dieser Innenschicht ("erste Legierung") besteht aus Zirkoniumschwamm mit $1,5 \pm 0,1$ % Zinn, $0,21 \pm 0,03$ % Eisen, $0,1 \pm 0,03$ % Chrom, $0,14 \pm 0,02$ % Sauerstoff, $0,01 \pm 0,002$ % Silizium und weniger als 0,007 % Nickel. Es handelt sich bei dieser Legierung also um Zirkaloy 4 mit einem verhältnismäßig hohen Gehalt an Zinn, Sauerstoff und Silizium. Dieses Material läßt unter den Bedingungen des Druckwasserreaktors nicht erwarten, daß das Hüllrohr von der Innenseite ausgehende, durch das ganze Hüllrohr wachsende Schäden erleidet.

Die dünne Außenschicht 5 besteht aus einer Legierung ("zweite Legierung"), die neben Zirkoniumschwamm $0,8 \pm 0,1$ % Zinn, $0,21 \pm 0,03$ % Eisen, $0,1 \pm 0,03$ % Chrom, $0,01 \pm 0,002$ % Silizium und einen Sauerstoffgehalt zwischen 0,12 und 0,16 % aufweist. Dabei ist angenommen, daß keine besonderen Maßnahmen erforderlich sind, um die Korrosion in einem lithiumhaltigen Medium zu verringern.

Im Zirkaloy ist die Menge des Zinns im Hinblick auf die erforderlichen mechanischen Eigenschaften über 1,2 % angehoben, aber mit Rücksicht auf die durch Zinn erhöhte Korrosionsbereitschaft auf 1,7 % beschränkt. Figur 2 zeigt, wie bei Wasser (350 C bei 170 bar) bzw. Dampf (420° C bei 105 bar) die Korrosionsrate, gemessen als Gewichtszunahme in Milligramm pro $dm^2$ und Tag bei Zirkaloy 4 ("Zry-4") in einem entsprechenden Autoklaven vom Zinngehalt abhängt.

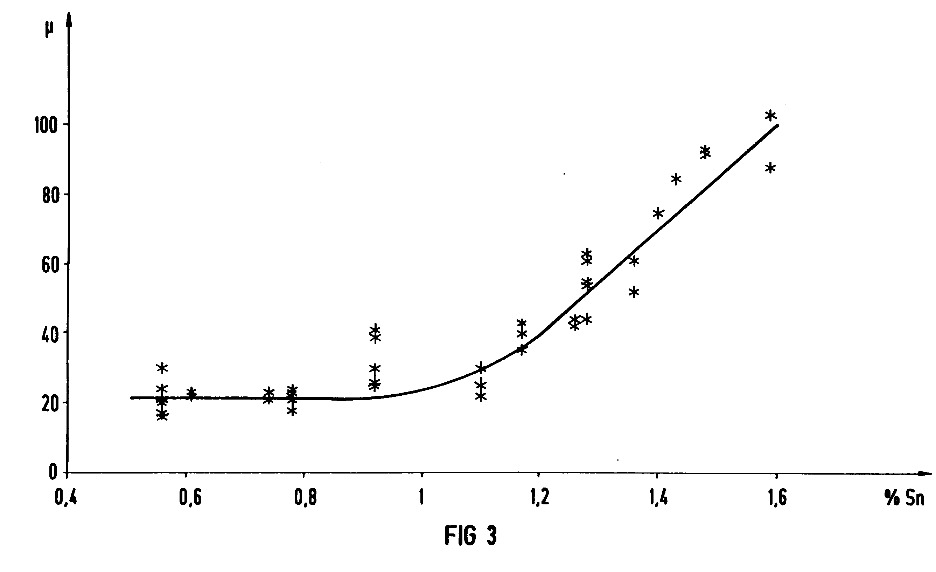

Figur 3 zeigt die entsprechenden Meßwerte von Oxidschichtdicken, die sich im Reaktorbetrieb an verschiedenen Werkstücken gebildet haben. Dabei wurde in einer einzigen Zry-4-Schmelze ein Sn-Gradient aufrecht erhalten und das Material der einzelnen Werkstücke dieser einen Schmelze an verschiedenen Orten entnommen. Bei Betriebstemperatur des Reaktors tritt demnach eine besonders geringe Oxydation auf, solange der Zinngehalt insbesondere in der 2. Legierung unter etwa 1,1 % gehalten ist. Da aber die Innenschicht dem wässrigen Medium nur bei Zerstörung der Außenschicht ausgesetzt ist, können in der ersten Legierung darüberliegende Zinngehalte, insbesondere Zinngehalte über 1,4 Gew.% zugelassen werden, um vorteilhafte mechanische Eigenschaften des Hüllrohres zu erhalten.

Zirkoniumlegierungen sind bei einem Eisengehalt über etwa 0,5 Gew.% spröde und z.B. in Pilgermaschinen, praktisch nicht mehr mechanisch bearbeitbar. Der Festlegung des Eisengehaltes bei Zirkaloy 2 und Zirkaloy 4 lagen Laborversuche zugrunde, in denen sich bei 400° C bereits nach etwa 30 Tagen eine Oxydschicht von etwa 2 µ bildete, die die Legierung vor weiterer Oxydation schützt und nur noch eine - weitgehend vom Eisengehalt unabhängige - niedrige Korrosionsrate bewirkt. Dieser Übergang zu niedrigen Korrosionsraten ist temperaturabhängig und tritt bei 360° z. B. erst nach 110 bis 120 Tagen auf. Bei niedrigem Eisengehalt tritt aber ein erneutes Wachsen der Oxidschicht, also wieder eine erhöhte Gewichtszunahme, auf, sobald nach noch längeren Versuchsdauern die Oxydschicht Werte zwischen etwa 7 und 11 µm erreicht.

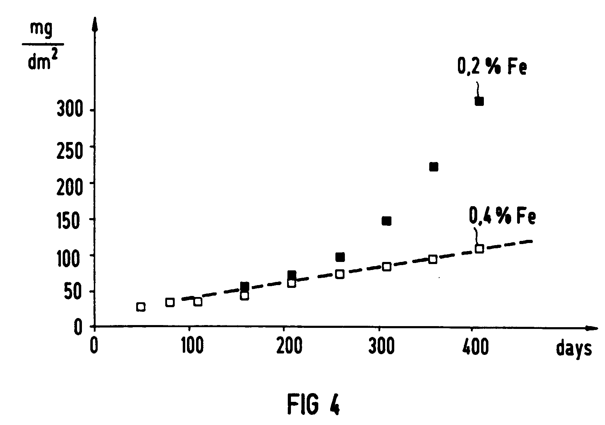

Entsprechende Meßwerte zeigt Fig. 4 für eine ZrlSnO,lCr-Legierung und Eisengehalten von 0,2 bzw. 0,4 % in einem Autoklaven bei 370°C und 190 bar. Daher sollten im Rahmen des verarbeitbaren Eisengehaltes möglichst hohe Konzentrationen, insbesondere im Bereich von Zry-4, angestrebt werden.

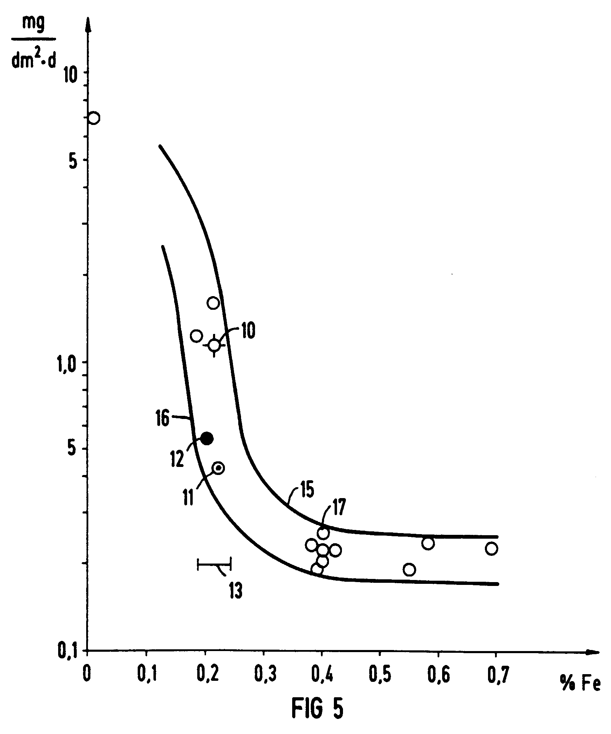

Dies ergibt auch der Vergleich nach Figur 5, in der mit den Meßpunkten 10, 11 und 12 die Korrosionsraten im Langzeitversuch bei 370 C und 190 bar für ein Abstandhalter-Blech aus Zry 4, ein umgeschmiedetes Zry4-Blech und ein gepilgertes Rohr aus Zry 4 dargestellt ist. Mit 13 ist der nach der ASTM-Norm für Zry 4 zulässige Eisen-Bereich angegeben. Die Kurven 15 und 16 umschreiben einen Bereich von Meßwerten 17, die durch Variation des Eisengehaltes in Zry 4 erhalten sind.

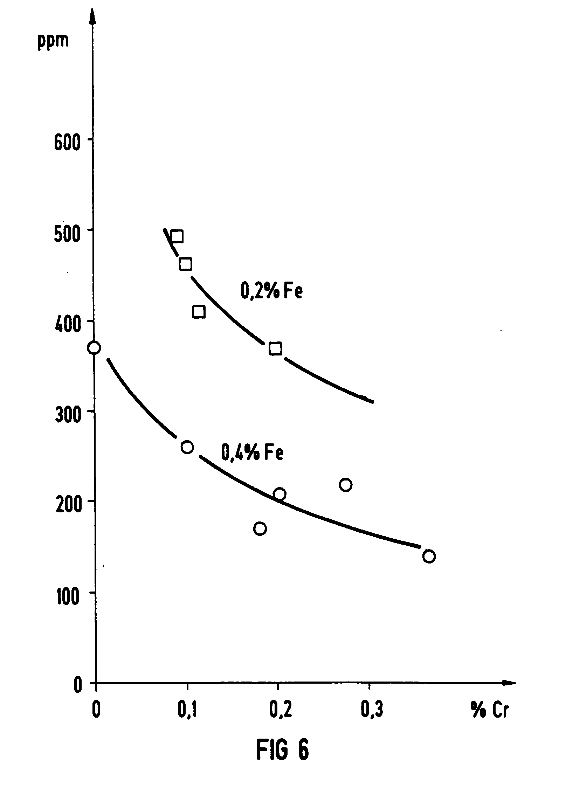

Betrachtet man aber die Wasserstoffaufnahme (Figur 6) bei einem Korrosionstest, bei dem Zirkonium mit 1 % Sn, 0,2 % bzw. 0,4 % Fe und unterschiedlichen Chrom-Gehalten über 410 Tage im Autoklaven bei 370° eingesetzt wurde, so zeigt sich, daß eine Erhöhung des Chromgehaltes über 0,1 % hinaus ähnlich wie ein erhöhter Eisengehalt wirkt.

Die Beschränkung des Eisengehaltes bei Zry 4 und insbesondere bei Zry 2 trägt daher dem günstigen Einfluß dieses Metalls auf das Korrosionsverhalten im Langzeittest nicht ausreichend Rechnung; hierfür ist bei Zinngehalten über etwa 1 % insbesondere ein Gesamtgehalt an Eisen und Chrom zwischen etwa 0,4 bis 0,5 vorteilhaft, der aber über der Spezifikation von Zry liegt. Bei Duplex-Rohren mit weniger Zinn in der Außenschicht kann daher ein Fe+Cr-Gehalt von wenigstens 0,25 %, insbesondere mindestens etwa 0,35 %, gewählt werden, während für die Innenschicht die Grenzen des Zirkaloys ungefähr eingehalten werden, also trotz eines höheren Zinngehaltes der Fe-Gehalt und der (Fe+Cr)-Gehalt niedriger oder höchstens etwa gleich groß im Vergleich zur Außenschicht gewählt ist.

Als zweckmäßige Obergrenzen für den Gesamtgehalt an Eisen und Chrom der zweiten Legierung können z.B. 0,8 % oder 0,6 % angegeben werden.

Die Erfindung ermöglicht ein problemloses Rückführen anfallender Abfälle. Hierzu sei z.B. ein Hüllrohr mit 10,7 mm Außendurchmesser und einer Wandstärke von 0,27 mm betrachtet, wobei 16 % der Wandstärke, also etwa 16,5 % des Materials auf die Außenschicht fällt, die aus ZrI,lSnO, 4Fe0,25Cr besteht. Die Innenschicht besteht aus Zry 2 der Zusammensetzung Zrl,7SnD,16Fe0,12Cr0,03Ni. Beide Legierungen sind ferner durch einen Sauerstoffgehalt von etwa 0,07 % und einen Siliziumgehalt von etwa 0,012 % festgelegt. Der hohe Eisengehalt der Außenschicht ist bei diesem verhältnismäßig hohen Zinngehalt zwar bezüglich der Wasserstoffaufnahme dieser Schicht günstig, jedoch ist diese Legierung schwer verarbeitbar und läßt einen relativ hohen Ausschuß bei der Fertigung der Duplex-Hüllrohre befürchten. Dieser Ausschuß hat die Bruttozusammensetzung des ganzen Hüllrohres, nämlich Zrl,6Sn 0,2Fe0,14Cr0,03Ni, die innerhalb des Bereiches von Zry2 liegt. Durch Zusatz etwa der gleichen Menge von frisch gezogenem, verhältnismäßig billigem Legierungsmaterial der Bruttozusammensetzung ZrI,8SnO, 12Fe0,lCr0,05Ni zu dem rückgeführten Ausschuß kann daher eine neue Schmelze der für die Innenschicht erforderlichen Legierung hergestellt werden, die durch Schmieden und Extrudieren zu einem Rohr geformt wird und den Kern eines konzentrischen Rohrrohlings bildet, der an seiner Außenseite ein Rohr trägt, das aus frischem Material mit der Zusammensetzung der zweiten Legierung auf ähnliche Weise gebildet ist. Beide Rohre werden im Vakuum an den Enden miteinander verschweißt, so daß sich zwischen den beiden Rohren kein Gas befindet. Um eine metallurgische Bindung zwischen den beiden unterschiedlichen Legierungen zu erhalten, wird der Rohrrohling strangverpreßt und anschließend auf die gewünschten Maße mechanisch verarbeitet, z. B. in einer Pilgermaschine. Zwischen bzw. nach den einzelnen mechanischen Verarbeitungsschritten werden zweckmäßigerweise Glühungen vorgenommen.

Gegenüber diesem Ausführungsbeispiel besitzt ein Hüllrohr, bei dem für die Herstellung der Außenschicht ZrlSn0,2Fe0,3Cr als zweite Legierung verwendet ist, einen Eisengehalt, der im Hinblick auf die bessere Verarbeitbarkeit herabgesetzt ist, wobei die damit verbundene höhere Wasserstoffaufnahme durch einen erhöhten Chromgehalt teilweise kompensiert ist.

Gemäß den Figuren 2 und 3 bewirkt der reduzierte Zinngehalt ein geringeres Wachstum der Oxidschicht.

Obwohl Figur 2 Zinngehalte unter 0,6 % zunächst vorteilhaft erscheinen läßt, ist dieser Bereich ungünstig.

Die 0xidschicht-Bildung hängt einerseits vom Zeitpunkt ("transition point"), zu dem die in den Figuren 3 und 4 dargestellte stärkere Korrosion im Langzeit-Test ("post transition corrosion rate", PTCR) auftritt, andererseits von der PCTR selbst ab. Maßnahmen, die für eine möglichst niedrige PCTR günstig sind, können sich ungünstig insofern auswirken, als der transition point vorverlegt wird, also das mit der PCTR beschriebene Oxiddicken-Wachstum bereits früher auftritt.

Daher kann sich ein Zinngehalt unter 0,7 % bereits ungünstig in den Fällen erweisen, in denen die Legierung einer wässrigen LiOH-Lösung ausgesetzt ist, wobei zwar der Li-Gehalt selbst sehr gering sein kann, aber z.B. aufgrund des bereits erwähnten lokalen Siedens in Poren der Oxidscnicht die Korrosiven Einflüsse stark verändert. Da im Hinblick auf die Figuren 5 und 6 der (Fe + Cr)-Gehalt vorteilhaft über 0,25 %, insbesondere über 0,35 %, gehalten wird, sient die Erfindung jedenfalls einen Gesamt-gehalt an Eisen, Chrom und Zinn über 1 % in der zweiten Legierung vor.

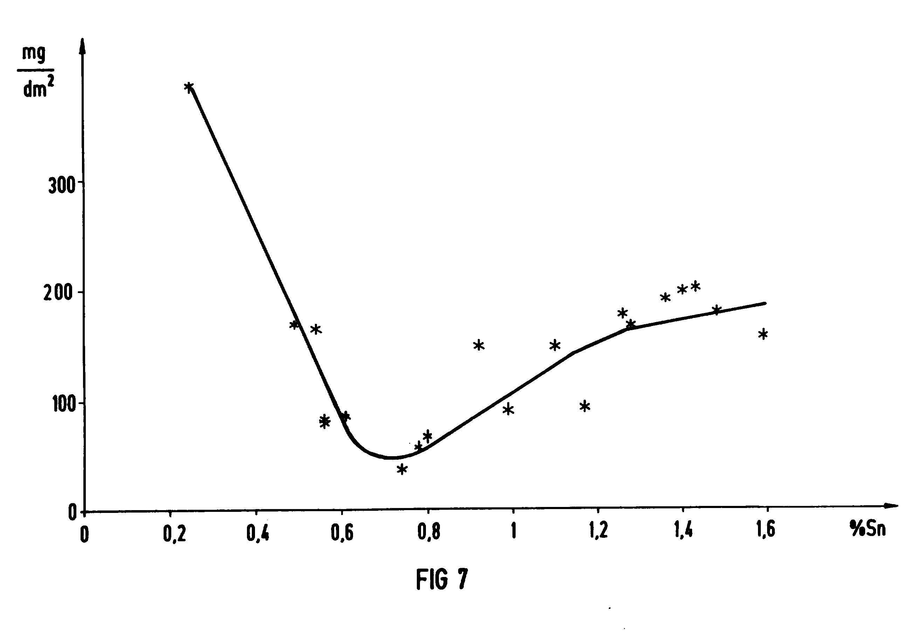

Damit werden die Brennstäbe auch für Leistungen und Temperaturbereiche verwendbar, bei denen ein Li-Gehalt des Kühlwassers pisher gefährliche Korrosionsschäden befürchten ließ. Dies zeigt Figur 7, bei dem die korrosionsbedingte Gewicntszunahme der Oberfläche eines Zr 0,2 Fe 0,1 Cr-Werkstückes unter Druckwasser bei 170 bar und 350° C mit 70 ppm Li und 153 Tagen im Autoklaven als Funktion des Sn-Gehaltes wiedergegeben ist.

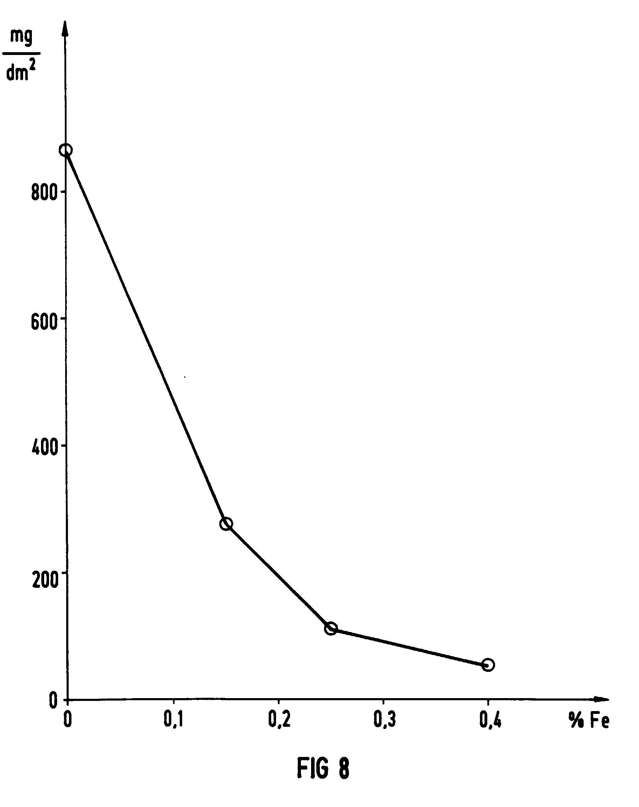

Figur 8 zeigt die Meßergebnisse des gleichen Korrosionstests bei einer Zr-Basislegierung mit 0,5 % Sn als Funktion des Eisengehaltes. Ähnliche Verhältnisse ergeben sich oft auch bei zusätzlichen Zugaben von weiteren Elementen (z.B. 0,5 % Nb).

Als Ergebnis der Figuren 2 bis 8 ergibt sich eine vorteilhafte Außenschicht des Hüllrohres einer Legierung Zr (0,8 ± 0,1) Sn (0,28 ± 0,04) Fe (0,17 ± 0,03) Cr. Für die Innenschicht kann vorteilhaft Zirkaloy 4 mit einem verhältnismäßig honen Zinngehalt (zwischen etwa 1,4 und 1,6) gewählt werden. Bei beiden Legierungen ist es vorteilhaft, einen definierten Gehalt aus Sauerstoff und Silizium, z.B. [0,14 ± 0,02) 0 und (0,01 ± 0,002) % Si, einzustellen.

Diese erste Legierung ist nach den hier vorliegenden Langzeit-Untersuchungen hinsichtlich ces Zinngehaltes bezüglich Korrosion in Wasser (Figur 2) und hinsichtlich des niedrigen Eisengehaltes und Gesamtgehaltes an Eisen und Chrom bezüglich Korrosion und Wasserstoffaufnahme (Figuren 4 bis 6) nicht optimal. Nach den bisherigen Erfahrungen bei Druckwasserreaktoren sind jedoch bei dieser Legierungszusammensetzung keine von der Innenseite her kommenden und bis zur zweiten Schicht reichenden Hüllrohrdefekte zu erwarten. Diese erste Schicht bestimmt weitgehend die erforderlichen mechanischen Eigenschaften des Hüllrohres. Gegen einen korrosiven Angriff und Hydrierung durch das Kühlmittel (auch im Falle einer lithiumhaltigen Lösung) ist das Hüllrohr durch die zweite Schicht geschützt, die zu diesem Zweck einen höheren Gehalt an Eisen und Fe + Cr und bei einem niedrigen Zinngehalt einen über 1,0 % liegenden Gesamtgehalt an Zinn, Chrom und Eisen aufweist. Beide Schichten des Verbundrohres bestehen aus den gleichen Metallen als Legierungszusätzen.

Tab. 1

| Gehalt in Gew.% | | | |
|---|---|---|---|
| | Zr-Schwamm | Zry 2 | Zry 4 |
| Sn | < 0,005 | 1,2 .. 1,7 | 1,2 .. 1,7 |
| Fe | < 0,150 | 0,07 .. 0,20 | 0,18 .. 0,24 |
| Cr | < 0,020 | 0,05 .. 0,15 | 0,07 .. 0,13 |
| Ni | < 0,007 | 0,03 .. 0,08 Fe&Cr&Ni: 0,18 .. 0,38 | 0,007 Fe&Cr: 0,28 .. 0,37 |
| $O_2$ | < 0,14 | | |
| Si | < 0,012 | < 0,012 | < 0,012 |

Tab. 2

| Legierungsbestandteile (Gew.%) Rest: Zirkonium | | | | |
|---|---|---|---|---|
| | 1. Legierung | | 2. Legierung | |
| | min. | max. | min. | max. |
| Sn | 1 (1,2/1,4) | 2(1,7/1,6) | 0,5 (0,7) | 1,3(1,1/0,9) |
| Fe | 0,05 (0,07/0,1/0,18) | 0,25(0,24) | 0,15(0,18/0,24) | 0,5(0,4/0,35) |
| Cr | 0,05(0,07) | 0,2(0,13) | 0,05(0,07/0,13) | 0,4 (0,25/0,21) |
| Fe+Cr+Sn | | | 1,0 (1,1) | (1,8/1,5) |
| Ni | ~ 0 | (0,08/0,007) | ~ 0 | 0,007 |
| Si | (0,005/0,007) | (0,02/0,012) | (0,005/0,007) | (0,02/0,012) |
| 0 | (0,05/0,07/0,12) | (0,2/0,16) | (0,05/0,07/,012) | (0,2/0,16) |

**Patentansprüche**

1. Brennstab eines druckwassergekühlten Brennelementes mit einem eine Brennstoff-Füllung umschließenden Hüllrohr, das aus einer ersten, der Brennstoff-Füllung zugewandten dickeren Innenschicht aus einer ersten Zirkonlegierung und einer an die Innenschicht metallurgisch gebundenen, dünneren Außenschicht aus einer zweiten Zirkoniumlegierung besteht, wobei die beiden Zirkonlegierungen als Legierungsbestandteile jeweils mindestens die Metalle Zinn, Eisen und Chrom enthalten und

   a) die erste Legierung 1 - 2 Gew.% Sn, 0,05 - 0,25 Gew.% Fe und 0,05 - 0,2 Gew.% Cr enthält,
   b) die zweite Legierung 0,5 - 1,3 Gew.% Sn, 0,15 - 0,5 Gew.% Fe und 0,05 - 0,4 Gew.% Cr aufweist,
   c) die zweite Legierung einen Gesamtgehalt an Zinn, Eisen und Chrom über 1,0 Gew.% aufweist und einen Gehalt an Zinn enthält, dessen Verhältnis zum Gehalt an Zinn in der ersten Legierung zwischen 0,35 und 0,7 liegt, und
   d) das Verhältnis des Gehaltes an Eisen und Chrom in der zweiten Legierung zum Zinngehalt der ersten Legierung zwischen 0,2 und 0,5 liegt.

2. Brennstab nach Anspruch 1, **dadurch gekennzeichnet**, daß beide Schichten jeweils außer Sn, Fe und Cr nur noch weitere für Zirkaloy 2 und Zirkaloy 4 zugelassene Legierungsbestandteile enthalten und die Mengen dieser weiteren Legierungsbestandteile praktisch innerhalb der für Zirkaloy 2 oder Zirkaloy 4 zugelassenen Grenzen liegen.

3. Brennstab nach Anspruch 1 oder 2, **dadurch gekennzeichnet**, daß die Mengen aller Bestandteile der ersten Schicht innerhalb der für Zirkaloy 2 oder insbesondere für Zirkaloy 4 zugelassenen Grenzen liegen.

4. Brennstab nach einem der Ansprüche 1 bis 3, **dadurch gekennzeichnet**, daß mindestens die zweite Legierung einen Nickelgehalt unter etwa 0,007 Gew.% aufweist.

5. Brennstab nach einem der Ansprüche 1 bis 4, **dadurch gekennzeichnet**, daß das Hüllrohr, vorzugsweise jeder der beiden Legierungen, Silizium mit einem Gehalt über 0,005, vorzugsweise über 0,007 Gew.%, und unter 0,02, vorzugsweise unter 0,012 Gew.%, aufweist.

6. Brennstab nach einem der Ansprüche 1 bis 5, **dadurch gekennzeichnet**, daß das Hüllrohr einen Sauerstoffgehalt unter 0,2, vorzugsweise unter etwa 0,16 Gew.% und über 0,05, vorzugsweise über 0,07, insbesondere über 0,12 Gew.% aufweist.

7. Brennstab nach einem der Ansprüche 1 bis 6, **dadurch gekennzeichnet**, daß der Zinngehalt der ersten Legierung über 1,2, vorzugsweise über 1,4 Gew.%, und unter 1,6 Gew.% liegt.

8. Brennstab nach einem der Ansprüche 1 bis 7, **dadurch gekennzeichnet**, daß der Zinngehalt der zweiten Legierung über 0,7 und unter 1,1, vorzugsweise unter 0,9 Gew.% liegt.

**9.** Brennstab nach einem der Ansprüche 1 bis 8, **dadurch gekennzeichnet**, daß der Eisengehalt der ersten Legierung über 0,1, vorzugsweise über 0,18 Gew.% und unter 0,24 Gew.% liegt.

**10.** Brennstab nach einem der Ansprüche 1 bis 9, **dadurch gekennzeichnet**, daß der Eisengehalt der zweiten Legierung über 0,18, vorzugsweise über 0,24 Gew.% und unter 0,4, vorzugsweise unter 0,35 Gew.% liegt.

**11.** Brennstab nach einem der Ansprüche 1 bis 10, **dadurch gekennzeichnet**, daß der Chromgehalt der ersten Legierung über 0,07 und unter 0,13 Gew.% liegt.

**12.** Brennstab nach einem der Ansprüche 1 bis 11, **dadurch gekennzeichnet**, daß der Chromgehalt der zweiten Legierung über 0,07, vorzugsweise über 0,13 Gew.% liegt.

**13.** Brennstab nach einem der Ansprüche 1 bis 12, **dadurch gekennzeichnet**, daß der Chromgehalt der zweiten Legierung unter 0,25 Gew.%, vorzugsweise unter 0,21 Gew.% liegt.

**14.** Brennstab nach einem der Ansprüche 1 bis 13, **dadurch gekennzeichnet**, daß der Gesamtgehalt an Chrom, Eisen und Zinn der zweiten Legierung zwischen 1,1 und 1,5 Gew.% liegt.

**15.** Brennstab nach Anspruch 1, **gekennzeichnet durch** einen Gehalt von $(1,5 \pm 0,1)$ Gew.% Sn in der ersten Zirkonlegierung, einen Gehalt von $(0,8 \pm 0,1)$ Gew.% Sn in der zweiten Legierung und jeweils $(0,21 \pm 0,03)$ Gew.% Fe, $(0,1 \pm 0,03)$ Gew.% Cr, $(0,14 \pm 0,02)$ Gew.% $O_2$, $(0,01 \pm 0.003)$ Gew.% Si und höchstens 0,007 Gew.% Ni in beiden Zirkonlegierungen.

**16.** Brennstab nach Anspruch 1, **gekennzeichnet durch** einer Gehalt von $(1,5 \pm 0,1)$ Gew.% Sn, $(0,21 \pm 0,03)$ Gew.% Fe und $(0,1 \pm 0.03)$ Gew.% Cr in der ersten Zirkonlegierung, einen Gehalt von $(0,8 \pm 0,1)$ Gew.% Sn, $(0,28 \pm 0,04)$ Gew.% Fe und $(0,17 + 0,04)$ Gew.-% Cr in der zweiten Zirkonlegierung und einen Gehalt von $(0,14 + 0,02)$ Gew.-% 0, $(0,01 + 0,003)$ Gew.-% Si und höchstens 0,007 Gew.-% Ni in beiden Zirkonlegierungen.

**17.** Brennstab eines druckwassergekühlten Brennelementes mit einem eine Brennstoff-Füllung umschließenden Hüllrohr, das aus einer ersten, der Brennstoff-Füllung zugewandten dickeren Innenschicht aus einer ersten Zirkonlegierung und einer an die Innenschicht metallurgisch gebundenen, dünneren Außenschicht aus einer zweiten Zirkoniumlegierung besteht, wobei die beiden Zirkonlegierungen als Legierungsbestandteile jeweils mindestens die Metalle Zinn, Eisen und Chrom enthalten und

a) die erste Legierung 1 - 2 Gew.-% Sn, 0,05 - 0,25 Gew.-% Fe und 0,05 - 0,2 Gew.-% Cr enthält,
b) die zweite Legierung 0,5 - 1,3 Gew.-% Sn, 0,15 - 0,5 Gew.-% Fe und 0,05 - 0,4 Gew.-% Cr aufweist,
c) in der ersten Legierung der Gehalt an Eisen und der Gehalt an Eisen und Chrom niedriger oder etwa gleich und der Gehalt an Zinn größer als der entsprechende Gehalt in der zweiten Legierung ist, und
d) die zweite Legierung einen Gesamtgehalt an Zinn, Eisen und Chrom über 1,0 Gew.-% aufweist.

**18.** Brennstab nach Anspruch 17, **dadurch gekennzeichnet**, daß der Gehalt an Zinn in der zweiten Legierung unter 1 Gew.-% liegt.

**19.** Brennstab nach Anspruch 17 oder 18, **dadurch gekennzeichnet**, daß der Gesamtgehalt an Eisen und Chrom in der zweiten Legierung über 0,24, insbesondere über 0,35 % liegt.

**20.** Brennstab nach einem der Ansprüche 17 bis 19, **dadurch gekennzeichnet**, daß der Gesamtgehalt an Eisen und Chrom in der zweiten Legierung unter 0,8 Gew.-% liegt.

**21.** Brennstab nach einem der Ansprüche 17 bis 20, **dadurch gekennzeichnet**, daß der Gehalt an Eisen in der zweiten Legierung über 0,24 Gew.-% liegt.

**22.** Brennelement eines Druckwasserreaktors mit Brennstäben nach einem der Ansprüche 1 bis 21.

## Claims

**1.** Fuel rod of a pressurized-water-cooled fuel element, having a cladding tube which encloses a fuel filling and which comprises a first thicker inner layer which is adjacent to the fuel filling and is composed of a first zirconium alloy, and having a thinner outer layer which is metallurgically bound to the inner layer and is composed of a second zirconium alloy, the two zirconium alloys each containing at least the metals tin, iron and chromium as alloying constituents, and

a) the first alloy containing 1 - 2 % by weight of Sn, 0.05 - 0.25 % by weight of Fe and 0.05 - 0.2 % by weight of Cr,

b) the second alloy containing 0.5 - 1.3 % by weight of Sn, 0.15 - 0.5 % by weight of Fe and 0.05 - 0.4 % by weight of Cr,

c) the second alloy having a total content of tin, iron and chromium of over 1.0 % by weight and a content of tin whose ratio to the content of tin in the first alloy is between 0.35 and 0.7, and

d) the ratio of the content of iron and chromium in the second alloy to the tin content of the first alloy being between 0.2 and 0.5.

2. Fuel rod according to Claim 1, characterized in that both layers in each case contain, in addition to Sn, Fe and Cr, only further alloying constituents permitted for Zircaloy 2 and Zircaloy 4 and the amounts of said further alloying constituents are virtually within the limits permitted for Zircaloy 2 or Zircaloy 4.

3. Fuel rod according to Claim 1 or 2, characterized in that the amounts of all the constituents of the first layer are within the limits permitted for Zircaloy 2 or, in particular, for Zircaloy 4.

4. Fuel rod according to one of Claims 1 to 3, characterized in that at least the second alloy has a nickel content of less than about 0.007 % by weight.

5. Fuel rod according to one of Claims 1 to 4, characterized in that the cladding tube, preferably comprising the two alloys, comprises silicon with a content of over 0.005, preferably over 0.007 % by weight, and of less than 0.02, preferably less than 0.012 % by weight.

6. Fuel rod according to one of Claims 1 to 5, characterized in that the cladding tube has an oxygen content of less than 0.2, preferably less than about 0.16 % by weight and of over 0.05, preferably over 0.07, in particular over 0.12 % by weight.

7. Fuel rod according to one of Claims 1 to 6, characterized in that the tin content of the first alloy is over 1.2, preferably over 1.4 % by weight and less than 1.6 % by weight.

8. Fuel rod according to one of Claims 1 to 7, characterized in that the tin content of the second alloy is over 0.7 and less than 1.1, preferably over 0.9 % by weight.

9. Fuel rod according to one of Claims 1 to 8, characterized in that the iron content of the first alloy is over 0.1, preferably over 0.18 % by weight and less than 0.24 % by weight.

10. Fuel rod according to one of Claims 1 to 9, characterized in that the iron content of the second alloy is over 0.18, preferably over 0.24 % by weight and less than 0.4, preferably less than 0.35 % by weight.

11. Fuel rod according to one of Claims 1 to 10, characterized in that the chromium content of the first alloy is over 0.07 and less than 0.13 % by weight.

12. Fuel rod according to one of Claims 1 to 11, characterized in that the chromium content of the second alloy is over 0.07, preferably over 0.13 % by weight.

13. Fuel rod according to one of Claims 1 to 12, characterized in that the chromium content of the second alloy is less than 0.25 % by weight, preferably less than 0.21 % by weight.

14. Fuel rod according to one of Claims 1 to 13, characterized in that the total content of chromium, iron and tin of the second alloy is between 1.1 and 1.5 % by weight.

15. Fuel rod according to Claim 1, characterized by a content of $(1.5 \pm 0.1)$ % by weight of Sn in the first zirconium alloy, a content of $(0.8 \pm 0.1)$ % by weight of Sn in the second alloy and, in each case, $(0.21 \pm 0.03)$ % by weight of Fe, $(0.1 \pm 0.03)$ % by weight of Cr, $(0.14 \pm 0.02)$ % by weight of $O_2$, $(0.01 \pm 0.003)$ % by weight of Si and not more than 0.007 % by weight of Ni in both zirconium alloys.

16. Fuel rod according to Claim 1, characterized by a content of (1.5 ± 0.1) % by weight of Sn, (0.21 ± 0.03) % by weight of Fe and (0.1 ± 0.03) % by weight of Cr in the first zirconium alloy, a content of (0.8 ± 0.1) % by weight of Sn, (0.28 ± 0.04) % by weight of Fe and (0.17 ± 0.04) % by weight of Cr in the second zirconium alloy and a content of (0.14 ± 0.02) % by weight of O, (0.01 ± 0.003) % by weight of Si and not more than 0.007 % by weight of Ni in both zirconium alloys.

17. Fuel rod of a pressurized-water-cooled fuel element, having a cladding tube which encloses a fuel filling and which comprises a first thicker inner layer which is adjacent to the fuel filling and is composed of a first zirconium alloy, and having a thinner outer layer which is metallurgically bound to the inner layer and is composed of a second zirconium alloy, the two zirconium alloys each containing at least the metals tin, iron and chromium as alloying constituents, and

   a) the first alloy containing 1 - 2 % by weight of Sn, 0.05 - 0.25 % by weight of Fe and 0.05 - 0.2 % by weight of Cr,
   b) the second alloy containing 0.5 - 1.3 % by weight of Sn, 0.15 - 0.5 % by weight of Fe and 0.05 - 0.4 % by weight of Cr,
   c) in the first alloy, the iron content and the iron and chromium content is less than or approximately equal to, and the tin content is greater than, the corresponding content in the second alloy, and
   d) the second alloy has a total content of tin, iron and chromium of over 1.0 % by weight.

18. Fuel rod according to Claim 17, characterized in that the tin content in the second alloy is less than 1 % by weight.

19. Fuel rod according to Claim 17 or 18, characterized in that the total content of iron and chromium in the second alloy is over 0.24 % by weight, in particular over 0.35 % by weight.

20. Fuel rod according to one of Claims 17 to 19, characterized in that the total content of iron and chromium in the second alloy is less than 0.8 % by weight.

21. Fuel rod according to one of Claims 17 to 20, characterized in that the iron content in the second alloy is over 0.24 % by weight.

22. Fuel element of a pressurized-water reactor comprising fuel rods as claimed in one of Claims 1 to 21.

**Revendications**

1. Crayon combustible d'un assemblage combustible refroidi à l'eau sous pression comportant un tube-gaine entourant un remplissage de comBustible, qui se compose d'une première couche interne plus épaisse, tournée vers le remplissage de combustible, en un premier alliage de zirconium et d'une couche externe plus fine, liée métallurgiquement à la couche interne, en un second alliage de zirconium, les deux alliages de zirconium contenant en tant que constituants d'alliage, chacun au moins les métaux étain, fer et chrome, et

   a) le premier alliage renferme 1 à 2 % en poids de Sn, 0,05 à 0,25 % en poids de Fe et 0,05 à 0,2 % en poids de Cr,
   b) le deuxième alliage comprend 0,5 à 1,3 % en poids de Sn, 0,15 à 0,5 % en, poids de Fe et 0,05 à 0,4 % en poids de Cr,
   c) le deuxième alliage a une teneur totale en étain, fer et chrome supérieure à 1,0 % en poids et une teneur en étain dont le rapport à la teneur en étain dans le premier alliage est compris entre 0,35 et 0,7, et
   d) le rapport de la teneur en fer et chrome dans le second alliage à la teneur en étain dans le premier alliage est compris entre 0,2 et 0,5.

2. Crayon combustible selon la revendication 1, caractérisé en ce que les deux couches contiennent chacune en plus de Sn, Fe et Cr, d'autres constituants d'alliage autorisés pour le Zirkaloy 2 et le Zirkaloy 4 et en ce que les quantités de ces autres constituants d'alliage sont pratiquement dans les limites autorisées pour le Zirkaloy 2 et le Zirkaloy 4.

3. Crayon combustible selon les revendications 1 ou 2, caractérisé en ce que les quantités de tous les constituants de la première couche sont à l'intérieur des limites autorisées pour le Zirkaloy 2 ou en particulier pour le Zirkaloy 4.

4. Crayon combustible selon l'une des revendications 1 à 3, caractérisé en ce qu'au moins le second alliage présente une teneur en nickel inférieure à environ 0,007 % en poids.

5. Crayon combustible selon l'une des revendications 1 à 4, caractérisé en ce que dans le tube-gaine, chacun des deux alliages présente de préférence du silicium avec une teneur supérieure à 0,005, de préférence supérieure à 0,007 % en poids, et inférieure à 0,02, de préférence inférieure à 0,12 % en poids.

6. Crayon combustible selon l'une des revendications 1 à 5, caractérisé en ce que le tube-gaine présente une teneur en oxygène inférieure à 0,2, de préférence inférieure à environ 0,16 % en poids et supérieure à 0,05, de préférence supérieure à 0,07, en particulier supérieure à 0,12 % en poids.

7. Crayon combustible selon l'une des revendications 1 à 6, caractérisé en ce que la teneur en étain du premier alliage est supérieure à 1,2, de préférence supérieure à 1,4 % et inférieure à 1,6 % en poids.

8. Crayon combustible selon l'une des revendications 1 à 7, caractérisé en ce que la teneur en étain du deuxième alliage est supérieure à 0,7 et inférieure à 1,1, de préférence inférieure à 0,9 % en poids.

9. Crayon combustible selon l'une des revendications 1 à 8, caractérisé en ce que la teneur en fer du premier alliage est supérieure à 0,1, de préférence supérieure à 0,18 % en poids et inférieure à 0,24 % en poids.

10. Crayon combustible selon l'une des revendications 1 à 9, caractérisé en ce que la teneur en fer du deuxième alliage est supérieure à 0,18, de préférence supérieure à 0,24 % en poids et inférieure à 0,4 %, de préférence inférieure à 0,35 % en poids.

11. Crayon combustible selon l'une des revendications 1 à 10, caractérisé en ce que la teneur en chrome du premier alliage est supérieure à 0,07 et inférieure à 0,13 % en poids.

12. Crayon combustible selon l'une des revendications 1 à 11, caractérisé en ce que la teneur en chrome du deuxième alliage est supérieure à 0,07, de préférence supérieure à 0,13 % en poids.

13. Crayon combustible selon l'une des revendications 1 à 12, caractérisé en ce que la teneur en chrome du deuxième alliage est inférieure à 0,25 %, de préférence inférieure à 0,21 % en poids.

14. Crayon combustible selon l'une des revendications 1 à 13, caractérisé en ce que la teneur totale en chrome, fer et étain du deuxième alliage est comprise entre 1,1 et 1,5 % en poids.

15. Crayon combustible selon la revendication 1, caractérisé par une teneur en Sn de $(1,5 \pm 0,1)$ % en poids dans le premier alliage de zirconium, par une teneur en Sn de $(0,8 \pm 0,1)$ % en poids dans le second alliage et par des teneurs de $(0,21 \pm 0,03)$ % en poids de Fe, $(0,1 \pm 0,03)$ % en poids de Cr, $(0,14 \pm 0,02)$ % en poids de $O_2$, $(0,01 \pm 0,003)$ % en poids de si et au plus de 0,007 % en poids de Ni dans chacun des deux alliages de zirconium.

16. Crayon combustible selon la revendication 1, caractérisé par une teneur en Sn de $(1,5 \pm 0,1)$ % en poids, par une teneur en Fe de $(0,21 \pm 0,03)$ % en poids et par une teneur en Cr de $(0,1 \pm 0,03)$ % en poids dans le premier alliage de zirconium, par une teneur en Sn de $(0,8 \pm 0,1)$ % en poids, par une teneur en Fe de $(0,28 \pm 0,04)$ % en poids et par une teneur en Cr de $(0,17 \pm 0,04)$ % en poids dans le second alliage de zirconium et par une teneur en O de $(0,14 \pm 0,02)$ % en poids, par une teneur en Si de $(0,01 \pm 0,003)$ % en poids et par une teneur en Ni de 0,007 % en poids au maximum dans les deux alliages de zirconium.

17. Crayon combustible d'un assemblage combustible refroidi à l'eau sous pression, avec un tube-gaine entourant un remplissage de combustible, qui se compose d'une première couche interne plus épaisse tournée vers le remplissage de combustible, en un premier alliage de zirconium et d'une couche externe plus mince, liée métallurgiquement à la couche interne, en un second alliage de zirconium, les deux alliages de zirconium contenant chacun comme constituants d'alliage, au moins les métaux étain, fer et chrome et

a) le premier alliage contient 1 à 2 % en poids de Sn, 0,05 à 0,25 % en poids de Fe et 0,05 à 0,2 % en poids de Cr,
b) le deuxième alliage présente 0,5 à 1,3 % en poids de Sn, 0,15 à 0,5 % en poids de Fe et 0,05 à 0,4 % en poids de Cr,

c) dans le premier alliage, la teneur en fer et la teneur en fer et chrome sont plus faibles ou sensiblement égales et la teneur en étain est plus élevée que la teneur correspondante dans le second alliage, et

d) le second alliage présente une teneur totale en étain, fer et chrome supérieure à 1,0 % en poids.

18. Crayon combustible selon la revendication 17, caractérisé en ce que la teneur en étain dans le second alliage est inférieure à 1 % en poids.

19. Crayon combustible selon les revendications 17 ou 18, caractérisé en ce que la teneur totale en fer et chrome dans le second alliage est supérieure à 0,24, en particulier supérieure à 0,35 %.

20. Crayon combustible selon l'une des revendications 17 à 19, caractérisé en ce que la teneur totale en fer et chrome dans le second alliage est inférieure à 0,8 % en poids.

21. Crayon combustible selon l'une des revendications 17 à 20, caractérisé en ce que la teneur en fer dans le second alliage est supérieure à 0,24 % en poids.

22. Assemblage combustible d'un réacteur à eau sous pression ayant des crayons combustibles selon l'une des revendications 1 à 21.

FIG 1

FIG 2

FIG 3

FIG 4

FIG 5

FIG 6

FIG 7

FIG 8